# EUROPEAN PATENT APPLICATION

(11) **EP 1 130 232 A2**
(43) Date of publication of application: **05.09.2001**
(21) Application number: 01200635.9
(22) Date of filing: 22.02.2001
(51) Int. Cl.: F01P 7/08, F01P 7/04

(54) **Movement transmission device for motor vehicle fans**

(30) Priority: 29.02.2000 IT MI000381
(71) Applicant: Baruffaldi S.p.A., 20097 San Donato Milanese, Milan (IT)
(72) Inventor: Boffelli, Piercarlo, Milano (IT); Bellotti, Claudio, Cerro al Lambro (MI) (IT); Depoli, Erminio, Crema (CR) (IT); Natale, Fabio, San Donato Milanese (MI) (IT)
(74) Representative: Raimondi, Alfredo, Dott. Ing. Prof.

(57) **Abstract**

Device for transmitting the movement to a fan (1) for cooling the coolant in a motor vehicle, comprising movement generating means (3,21) on which the fan (1) is mounted by means of an idle support (1a), a first electromagnetic clutch (30), engagement/disengagement of which causes rotation of the fan at a number of revolutions equal to that of the movement generating means or at zero revolutions; a second clutch (60;160;260;360), engagement/disengagement of which causes rotation of the fan at a number of revolutions lower than that of the movement generating means or at zero revolutions; means (62) of the electromagnetic type for engaging/disengaging the second clutch, in which said first clutch (30) is supported in a position substantially adjacent to the fixed base (10) of the engine casing and said clutch (60) is supported by a fixed shaft (13) in a position substantially projecting from the base (10) of the engine.

## Description

The present invention relates to a device for transmitting the movement to fans for cooling the coolant in motor vehicles.

It is known in the technical sector relating to the cooling of coolants contained in motor-vehicle radiators that there exists the need to force air onto the radiator in order to obtain more rapid dissipation of heat from the coolant to the exterior, said forced air flow being obtained by causing rotation of a fan which is normally mounted either directly on the crankshaft or on the water pump shaft cr on a driven and fixed shaft carrying a pulley which receives movement from a belt actuated by the crankshaft.

It is also known that said fan must be made to rotate only upon reaching a certain predefined temperature of the water detected by means of a thermostat which activates an electromagnetic clutch, closing of which causes the fan to start rotating.

More particularly it is required that a motor vehicle fan must be able to rotate:
- at a lower speed than that of the transmission shaft for cooling in low external temperature conditions;
- at a speed equal to or even greater than that of the transmission shaft in the case of higher external temperatures or use in severe conditions which cause overheating of the engine;
- at zero speed, namely with the fan which does not rotate at all and remains in an idle condition with respect to the transmission shaft, in the case of particularly low temperatures at which further cooling is of no use or even damaging.

In an attempt to achieve these performance features, coupling systems of the mixed type with electromagnetically operated friction clutches and drive couplings based on the use of parasitic currents generated by rotation of a conducting element in the vicinity of permanent magnets have been developed.

DE-32 03 143 describes, for example, an arrangement in which the crankshaft is connected to the rotor of an electromagnetic clutch, engaged by an armature connected to the fan for direct driving, whereas low speed conditions make use of the engagement between a conducting disk, rotating with the transmission shaft, and the permanent magnets integral with the fan, said engagement causing transmission of movement at a low speed as a result of relative slipping between the two parts.

With this solution, however, it is not possible to obtain the idle condition of the fan.

In order to overcome this drawback, EP-0,317,703 described a coupling which, adopting the solution disclosed by the preceding patent DE-32 03 143, also envisages a second electromagnetic clutch which is arranged concentrically with the first one and which, in combination with the others, is able to achieve the three different operating conditions.

This solution has a structural limitation consisting in the fact that the particular configuration of the engine compartments of motor vehicles for which said devices are intended requires, in particular in the case of a fan supported by a fixed shaft carrying the actuating pulley, the positioning of large projecting rotational masses at a considerable distance from the point of attachment of the fixed shaft supporting the fan, with obvious drawbacks resulting in the need, among other things, for brackets and fixtures outside the fixed shaft, forming together a further external support to be connected to the fixed part for supporting both the electromagnets; this gives rise to a further increase in the dimensions, technical difficulties in configuration of the parts - due to the presence in the engine compartment of other engine parts (e.g. flywheel) - and a consequent overall increase in the manufacturing costs.

The technical problem which is posed, therefore, is that of providing a device for transmitting the rotational movement to a fan for cooling the coolant of motor vehicles, which allows the fan to rotate at a number of revolutions which can be determined depending on the actual cooling requirement of the engine, which also includes the possibility of keeping the fan stationary in the idle position, and which has compact dimensions and does not have large projecting rotational masses which are costly.

These technical problems are solved according to the present invention by a device for transmitting the movement to a fan cooling the coolant of a motor vehicle, comprising movement generating means on which the fan is mounted by means of an idle support, a first electromagnetic clutch, engagement/disengagement of which causes rotation of the fan at a number of revolutions equal to that of the movement generating means or at zero revolutions; a second clutch, engagement/disengagement of which causes rotation of the fan at a number of revolutions lower than that of the movement generating means or at zero revolutions; means of an electromagnetic type for engaging/disengaging the said second clutch, in which said first clutch is supported in a position substantially adjacent to the fixed base of the engine casing and said second clutch is supported by a fixed shaft in a position substantially projecting from the base of the engine.

Further details may be obtained from the following description of a non-limiting example of embodiment of the invention, provided with reference to the accompanying drawings in which:
Figure 1 shows a schematic axial section through the device for transmitting the movement to the fan according to the invention with a second induction clutch in the closed engaged position; and
Figure 2 shows a schematic axial section through the device for transmitting the movement to the fan according to the present invention with a second magnetic-hysteresis clutch in the open disengaged position.

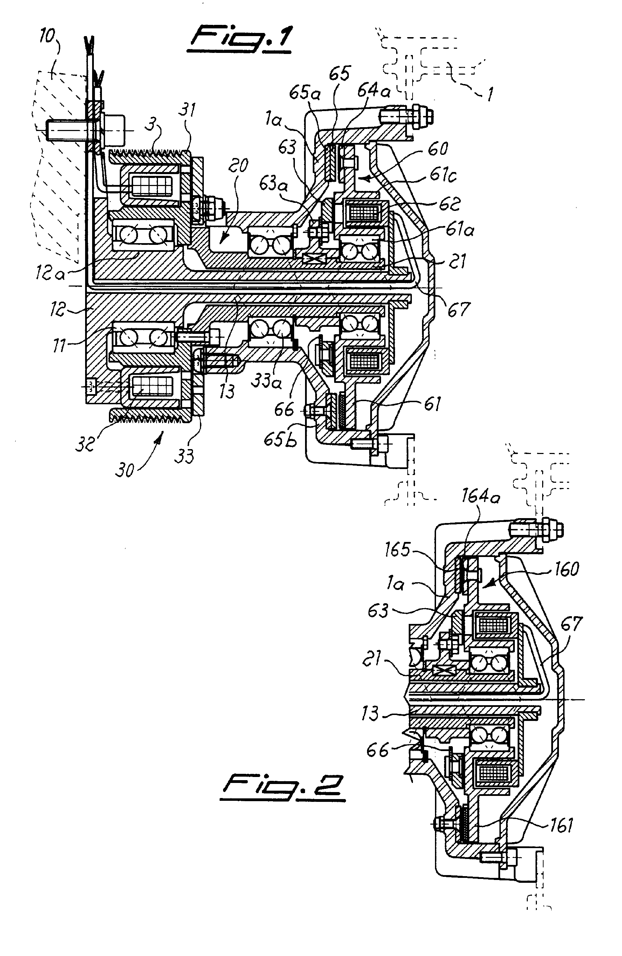

As shown in Fig. 1, the device for transmitting the movement to a motor-vehicle cooling fan 1 is arranged between the fan 1 itself and actuating means 20 integral with a pulley 3 connected to the crankshaft by means of a belt (not shown). For the sake of convenience of the description below, "longitudinal direction" will be understood as being that direction coinciding with/parallel to the longitudinal axis of the actuating means 20.

In greater detail the actuating means comprise a hollow sleeve 21, one end of which is connected to a rotor 31 integral with the pulley 3 and mounted on a bearing 11 keyed onto a seat 12a of a fixed support flange 12 integral with the base 10 of the engine.

Said flange 12 has a longitudinal extension towards the exterior, which forms a fixed spindle 13 with an inner through-cavity 13a through which electrical wires 67 may be passed.

Said rotor 31 forms the rotating element of a first clutch 30 formed by an annular electromagnet 32 concentric with the rotor 31 and arranged between the latter and the fixed flange 12 and electrically connected to a thermostat (not shown) for example for the cooling-water temperature.

The armature 33 of the clutch 30 is arranged on the opposite side to the electromagnet 32 with respect to the rotor 31, being connected to a bell 1a which supports the fan 1 and which is mounted on a bearing 33a in turn keyed onto the hollow sleeve 21.

On the free end of the fixed spindle 13 there is mounted a second clutch 60 of the induction type which is based on Foucault currents or parasitic currents and engagement of which is obtained by associated means consisting of a second annular electromagnet 62 coaxially mounted on the spindle 13 and concentrically inserted in a special annular seat 61a formed in the rotor 61 of the second clutch 60.

Said rotor 61 is in turn mounted on an associated bearing 61 keyed onto the sleeve 21.

The armature 63 of the second clutch is arranged on the opposite side of the rotor 61 with respect to the electromagnet 62, being locked in rotation with the sleeve 21 by means of a support 63a to which it is joined with the arrangement, in between, of an elastic membrane 66.

As mentioned, the second clutch 60 is of the induction type based on parasitic or Foucault currents and comprises a plurality of permanent magnets 64 which are supported by a retaining ring 64a made of non-magnetic material and integral with the rotor 61 and a first ring 65 made of conductive material and supported by a second ring 65a mounted on a non-magnetic support consisting of a part 65b of the bell 1a.

In this way the rotor 61 and the magnets 64 form the induction linkage elements with the ring 65, able to cause rotation of the bell la and therefore the fan 1.

The operating principle of the coupling is as follows:
- if the electromagnet 32 is kept deactivated, the armature 33 of the clutch remains separated from the rotor 31 and the fan 1 remains in an idle condition with respect to the movement generating sleeve 21;
- if the electromagnet 32 of the first clutch 30 is activated, the armature 33 is recalled so as to make contact with the rotor 31, together with which it starts to rotate, causing the rotation of the bell 1a, and therefore the fan 1, at a number of rotations equal to that of the actuating shaft;
- if the electromagnet 32 of the first clutch 30 is kept deactivated and the electromagnet 62 is activated, the armature 63 is recalled into contact with the rotor 61 which, starting to rotate, causes linkage of the second clutch 60 with the bell la and consequent rotation of the fan 1. Said rotation causes the formation of parasitic induction currents between the elements 64 and 65 of the clutch 60 which causes rotation of the bell la and therefore the fan 1.

Since driving of the bell by the rotor 61 occurs with relative slippage, the fan will rotate at a speed lower than that of the shaft 21.

It can therefore be understood how the transmission device according to the invention is able to ensure the three required speeds of rotation of the fan (number of revolutions equal to or less than those of the movement generating shaft or zero revolutions) without large rotating loads projecting from the fixed support, since the electromagnet of the second clutch may have much smaller dimensions.

Figure 2 shows a device similar to that described in relation to Fig. 1, in which the second clutch 160 is of the magnetic hysteresis type instead of the induction type.

In this case, the permanent magnets 164 supported by a ring 164a are arranged on the rotor 161, while a ring 165 made of magnetically semi-hard material is joined to the bell 1a.

The operating principle of the device remains substantially unchanged.

## Claims

1. Device for transmitting the movement to a fan (1) for cooling the coolant in a motor vehicle, comprising:
- movement generating means (3,21) on which the fan (1) is mounted by means of an idle support (1a);
- a first electromagnetic clutch (30), engagement/disengagement of which causes rotation of the fan at a number of revolutions equal to that of the movement generating means or at zero revolutions;
- a second clutch (60;160;260;360), engagement/ disengagement of which causes rotation of the fan at a number of revolutions lower than that of the movement generating means or at zero revolutions;
- means (62) of the electromagnetic type for engaging/disengaging the said second clutch;
**characterized in that** said first clutch (30) is supported in a position substantially adjacent to the fixed base (10) of the engine casing and said second clutch (60) is supported by a fixed shaft (13) in a position substantially projecting from the base (10) of the engine.

2. Device according to Claim 1, **characterized in that** said first clutch (30) and second clutch (60) are arranged coaxially with the fixed support shaft (13) and with each other.

3. Device according to Claim 1, **characterized in that** said engaging means of the second clutch (60) consist of an electromagnetic clutch.

4. Device according to Claim 3, **characterized in that** the rotor (61) of the second clutch (60) is joined, integrally, with the rotor of the electromagnetic engaging clutch of said second clutch (60).

5. Device according to Claim 4, **characterized in that** said engaging clutch of the second clutch (60) comprises an annular electromagnet (62) fixed to the support spindle (13) and concentrically inserted in a special annular seat (61c) formed in the rotor (61) of the second clutch (60).

6. Device according to Claim 1, **characterized in that** the conducting element of the second clutch (60) consists of an armature (63) rigidly joined to the movement generating means (21).

7. Device according to Claim 6, **characterized in that** said armature (63) is arranged on the opposite side of the rotor (61) with respect to the electromagnet (62), said armature being locked in rotation with the movement generating means (21) by means of a support (63a) to which it is joined with the arrangement, in between, of an elastic membrane (66).

8. Device according to Claim 1, **characterized in that** said fixed support spindle (13) is located coaxially inside the movement generating means (21) which are in turn located coaxially inside the second clutch (60).

9. Device according to Claim 1, **characterized in that** said second clutch is of the parasitic-current type.

10. Device according to Claim 1, **characterized in that** said second clutch is of the magnetic-hysteresis type.

11. Device according to Claim 1, **characterized in that** said fixed shaft (13) has a coaxial through-cavity (13a).

12. Device according to Claim 11, **characterized in that** the electric wires for connection to the electromagnet of the engaging clutch are arranged inside said coaxial through-cavity (13a) of the fixed shaft (13).
